# EUROPÄISCHE PATENTSCHRIFT

(11) **EP 1 050 206 B1**
(45) Veröffentlichungstag und Bekanntmachung des Hinweises auf die Patenterteilung: **12.11.2003**
(21) Anmeldenummer: 00109412.7
(22) Anmeldetag: 03.05.2000
(51) Int. Cl.: A01F 12/30

(54) **Erntemaschine**
Harvesting machine
Récolteuse

(30) Priorität: 05.05.1999 DE 19920538
(43) Veröffentlichungstag der Anmeldung: 08.11.2000
(73) Patentinhaber: CLAAS Selbstfahrende Erntemaschinen GmbH, 33428 Harsewinkel (DE)
(72) Erfinder: Heidjann, Franz, 33428 Harsewinkel (DE); Dammann, Martin, 33428 Harsewinkel (DE); Speckamp, Dirk, 59227 Ahlen (DE); Kühn, Bodo, 33330 Gütersloh (DE); Arnold, Andreas, 33824 Werther (DE); Fögeling, Walter, 33442 Herzebrock-Clarholz (DE)
(74) Vertreter: Patentanwälte Eisele, Otten, Roth & Dobler

(56) Entgegenhaltungen:
- EP-A- 0 862 849
- DE-A- 2 426 731
- DE-A- 2 455 565
- GB-A- 1 259 734
- GB-A- 2 095 964
- US-A- 2 778 483
- US-A- 3 021 662
- US-A- 4 453 375
- US-A- 4 539 801

## Beschreibung

Die Erfindung betrifft eine Erntemaschine, insbesondere einen Mähdrescher nach dem Oberbegriff des Anspruchs 1.

### Stand der Technik

Erntemaschinen mit unterschiedlichen Fördereinrichtungen sind z.B. durch die Druckschriften US-A-4539801, US-A-4453375 und US-A-2778483 bekannt geworden.

Herkömmliche Mähdrescher sind in der Regel mit einer Drescheinheit als Trennvorrichtung zum Trennen der Körner aus den Getreideähren und somit auch vom Stroh versehen, denen eine Abscheidevorrichtung nachgeschaltet ist. In dieser Abscheidevorrichtung, die üblicherweise als Schüttler ausgebildet sind, wird der Gutstrom der Körner von dem Gutstrom des Strohs getrennt.

Neben sogenannten Flächenschüttlern, bei denen sich ein Schüttelelement über die gesamte Arbeitsbreite der Abscheidevorrichtung erstreckt, sind auch sogenannte Hordenschüttler in Verwendung, mit denen eine Aufteilung der Schüttelfläche vorgenommen wurde, so daß einzelne Horden nebeneinander über die Arbeitsbreite entsprechend einer flächigen Abscheidevorrichtung angeordnet sind. Die einzelnen Schüttlerhorden können, beispielsweise über eine Kurbelwelle gesteuert, unterschiedliche Schüttelbewegungen ausführen.

Um den Gutstrom von der Trennvorrichtung zur Abscheidevorrichtung zu leiten, sind verschiedene Fördervorrichtungen in Gebrauch. Häufig werden hierbei sogenannte Fördertrommeln eingesetzt, die entweder ober- oder unterschlächtig arbeiten und mit von der Mantelfläche der Fördertrommel abstehenden Förderzinken das Gut von der Trennvorrichtung zur Abscheidevorrichtung leiten. Bei vielen Ausführungsformen einer solchen Fördertrommel sind die Förderzinken hierbei beweglich gegenüber der Fördertrommel exzentrisch zur Achse der Fördertrommel, z. B. an einer Kurbelwelle, befestigt. Derartige Fördereinheiten sind beispielsweise in den Druckschriften EP 86 28 48, EP 86 28 49 und EP 86 28 50 beschrieben.

In der GB-A-1259734 wird eine solche Fördertrommel beschrieben, die zusätzliche Leitbleche zur Aufnahme und Abgabe von Korn auf einen Schüttler aufweist, wobei die Leitbleche auch als Führung für Förderzinken bezeichnet werden.

Es hat sich in der Praxis gezeigt, daß bei gesteuerten Förderzinken die nicht unerhebliche Gefahr besteht, daß die rotierende Fördertrommel das Gut nicht restlos abgibt, so daß das Stroh sich am Trommelmantel verklemmt und über den gesamten Trommelumfang mitgenommen wird. Dieses führt in kürzester Zeit dazu, daß sich am Trommelmantel eine Strohschicht aufbaut, was zum Stillstand des Mähdreschers führt. Dieser Vorgang wird auch als Wickeln bezeichnet.

### Vorteile der Erfindung

Die Erfindung hat demgegenüber die Aufgabe, eine Erntemaschine, insbesondere einen Mähdrescher vorzuschlagen, bei dessen Fördervorrichtung zur Beschickung der Abscheidevorrichtung eine einwandfreie Gutabgabe erfolgt.

Diese Aufgabe wird ausgehend von Erntemaschinen der einleitend genannten Art durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend zeichnet sich eine erfindungsgemäße Erntemaschine dadurch aus, daß wenigstens ein Abstreifelement zum Abstreifen des Förderguts von den freien Enden der Förderzinken vorgesehen ist.

Bei Fördertrommeln der oben angeführten Art hat sich gezeigt, daß das Wickeln, das heißt im Falle eines Mähdreschers der Aufbau einer Strohschicht an der Fördereinheit im wesentlichen durch die Förderzinken verursacht wird. Vor allem von den freien Enden der Förderzinken wird das zu fördernde Gut, beispielsweise Stroh, nicht rechtzeitig restlos abgelöst. Durch ein zusätzliches Abstreifelement gemäß der Erfindung wird das Lösen des Gutes von den Förderzinken unterstützt, so daß sich das Aufwickeln des halm- oder stengelförmigen Gutes vermeiden läßt.

Ein erfindungsgemäßes Abstreifelement wird an einer Fördertrommel mit beweglichen, insbesondere gesteuerten Förderzinken eingesetzt. Bei dieser Art Fördereinheit wird wie oben angeführt ohne Abstreifelement häufig das halm- oder stengelförmige Gut beim Einfahren der Zinken in den Trommelmantel zwischen Trommelmantel und Förderzinken eingeklemmt, so daß das oben angeführte Problem vermehrt auftritt. Sofern der Förderzinken jedoch zuvor abgestreift wurde, ist diese Verklemmung nicht mehr möglich.

Die Abstreifelemente werden hierbei an der Fördertrommel selbst angebracht, so daß das Abstreifelement mit der Fördertrommel rotiert. Hierdurch werden umständliche bauliche Maßnahmen im Bereich der Fördertrommel oberhalb der Abscheidevorrichtung vermieden. Die Erfindung kann durch eine vergleichsweise wenig aufwendige Modifizierung der Fördertrommel realisiert werden.

Weiterhin umfaßt ein erfindungsgemäßes Abstreifelement eine über die Länge der Fördertrommel sich erstreckende Abstreifleiste, die mit Ausnehmungen für die Förderzinken versehen ist. In diesen Ausnehmungen bewegen sich die Förderzinken während des Betriebs der Fördereinheit. Während die freien Enden der Förderzinken im Mantel der Fördertrommel stets für ihre gesteuerte Bewegung geführt werden müssen und somit nicht ganz in die Fördertrommel eintauchen, können die Förderzinken die Abstreifleiste vollständig passieren, so daß das Fördergut vollständig abgestreift wird und sich weder zwischen den Förderzinken und dem Abstreifelement noch zwischen dem Förderzinken und dem Mantel der Fördertrommel verklemmen kann.

In einer vorteilhaften Weiterbildung der Erfindung werden zusätzlich zu den Förderzinken weitere Förderelemente an der Fördertrommel angebracht. Die Förderzinken wirken im hinteren Bereich der Fördertrommel in Richtung nach oben, wodurch der halm- oder stengelartigen Gutstrom angehoben wird. Durch zusätzliche Förderelemente, die beispielsweise starr am Mantel der Fördertrommel angebracht werden können, kann eine Auflockerung des Gutstroms während der Beförderung und damit eine bessere Wirkung über die ganze Länge der Abscheidevorrichtung mit einer gleichmäßigeren Gutverteilung erzielt werden. Der Wirkungsgrad der Abscheidevorrichtung ist damit zu erhöhen.

Vorteilhafterweise umfaßt ein derartiges zusätzliches Förderelement eine schräg von der Mantelfläche der Fördertrommel abstehende Förderleiste. Eine solche Förderleiste ist durch die schräg und nicht radial zur zylindrischen Mantelfläche angeordnete Förderleiste in der Lage, den angehobenen Gutstrom aufgelockert von der Fördertrommel weg zu fördern.

Vorteilhafterweise wird die Förderleiste mit der Abstreifleiste verbunden. Hierdurch ergibt sich zum Anbringen sowohl des Abstreifelements als auch des Förderelements an der Fördertrommel nur die Notwendigkeit eines weiteren Bauteils. Der Fertigungsaufwand wird hierdurch reduziert.

Bevorzugt wird die Förderleiste durchgehend mit der Abstreifleiste verbunden. Hierdurch ergibt sich eine Art haubenförmige Ausbildung des Abstreifelements in Verbindung mit der Förderleiste. Die Förderleiste verhindert damit zugleich, daß abzustreifendes Gut in den Bereich zwischen der Abstreifleiste und dem Trommelmantel gelangen kann.

In einer bevorzugten Weiterbildung der Erfindung werden die Ausnehmungen in der Abstreifleiste als offene Schlitze ausgeführt. Dies erleichtert vor allem die Montage des Abstreifelementes, das hierdurch nicht auf die Förderzinken aufgesteckt zu werden braucht und ermöglicht den Förderzinken zudem die durch die Kurbelsteuerung notwendige Bewegungsfreiheit in Umfangsrichtung der Mantelfläche der Fördertrommel.

Vorteilhafterweise wird das Abstreifelement sowohl über die Abstreifleiste als auch über die Förderleiste an der Mantelfläche befestigt, beispielsweise vernietet, verschraubt oder verschweißt. Hierzu empfiehlt es sich, entsprechende Abkantungen vorzunehmen, mit denen das Abstreifelement auf der Mantelfläche der Fördertrommel flächig aufliegt und an denen die Verschweißung vorgenommen werden kann.

In einer besonders vorteilhaften Ausführungsform der Erfindung wird das Abstreifelement einschließlich der Förderleiste und den zur Befestigung vorgesehenen Abkantungen aus einem Blech gebogen. Hierdurch ist eine kostengünstige Fertigung möglich.

In einer weiteren vorteilhaften Ausführungsform der Erfindung werden Stützelemente unter dem Abstreifelement vorgesehen. Diese Stützelemente, die beispielsweise im Bereich der schrägen Förderleiste von der Mantelfläche der Fördertrommel abstehend ausgebildet werden können, stützen das Abstreifelement, so daß die Verwendung eines entsprechend schwächeren Materials für die Herstellung des Abstreifelements möglich ist. Außerdem können beispielsweise die Abstreifelemente auch an derartigen Stützelementen mit der Fördertrommel verbunden werden. Auch hier ist eine Befestigung mittels Verschweißung, Verschraubung, Vernietung, usw. denkbar.

In einer besonderen Ausführungsform der Erfindung werden wenigstens zwei Fördereinheiten wie beschrieben zur Verteilung des Gutstroms auf die Abscheidevorrichtung verwendet, wodurch eine gleichmäßige Gutbeschickung mit wiederholter Auflockerung auch bei längeren Abscheidevorrichtungen gewährleistet bleibt.

Weiterhin hat es sich als vorteilhaft erwiesen, wenn die Abscheidevorrichtung unterhalb der Fördereinheit an die Form der Fördereinheit angepaßt ist. Hierdurch ergibt sich neben einer guten Förderung des Gutstroms zugleich eine Führungsfunktion für den Gutstrom. Insbesondere in Verbindung mit einer Fördertrommel, die die oben beschriebenen zusätzlichen Förderelemente aufweist, kann hierdurch die Gutverteilung weiter verbessert werden. Es ergibt sich gewissermaßen eine Art Abwurframpe für das Fördergut im Zusammenwirken mit den zusätzlichen Förderelementen.

Auch bei einem sogenannten Hordenschüttler wie oben angeführt, kann diese Anpassung der Abscheidevorrichtung vorgenommen werden. Hierbei werden die einzelnen, sich in der Schüttelbewegung regelmäßig unter der Fördereinheit auf und nieder bewegenden Schüttlerhorden an die Trommelform der Fördertrommel angepaßt.

Die Anpassung der Form der Schüttlerhorden an die Trommelform der Fördertrommel umfaßt vorteilhafterweise auch eine entsprechende Gestaltung der seitlichen Gehäusewandungen der einzelnen Schüttlerhorden. Diese Wandungen, die regelmäßig mit sägezahnartigen Ausbildungen versehen sind, die nur einen Gutstrom in Förderrichtung zulassen, sind in der beschriebenen Weiterbildung mit gerundeten Ausschnitten versehen, so daß eine derartige Schüttlerhorde vergleichsweise nahe an die entsprechende Fördertrommel heranbewegt werden kann.

Weiterhin ist es von Vorteil, wenn zusätzliche obere Fördereinrichtungen der erfindungsgemäßen Fördereinheit beziehungsweise den erfindungsgemäßen Fördereinheiten zugeordnet werden. Diese obere zusätzliche Fördereinrichtungen umfassen vor allem den von der Fördereinheit beziehungsweise den Fördereinheiten nach oben abgegebenen Gutstrom und können die Aufwärtsbewegung des Gutstroms in diesem Bereich in eine Bewegung in Richtung auf die Abscheidevorrichtung umsetzen. Auch hierdurch ist eine gleichmäßigere Gutverteilung auf der Abscheidevorrichtung zu erreichen.

Als obere Fördereinrichtungen kommen unterschiedliche Maßnahmen in Betracht. Es können beispielsweise nebeneinander rechenartig angeordnete Stangen mit einem Kurbelantrieb vorgesehen werden, die gegebenenfalls mit entsprechenden zusätzlichen Mitnahmeelementen zur Beförderung des auftreffenden Gutstroms in Richtung zur Abscheidevorrichtung versehen sind. Als Mitnahmeelemente kommen beispielsweise zinken- oder treppenförmige Ausbildungen in Betracht. Andere denkbare Ausführungsformen einer derartigen oberen Fördereinrichtung bestehen beispielsweise in flächigen Anordnungen mit oder ohne zusätzliche Förderelemente. Auch umlaufende Vorrichtungen, beispielsweise in Form einer oder mehrerer Trommeln oder eines Bandförderers mit oder ohne entsprechende zusätzliche Förderelemente sind an dieser Stelle denkbar.

### Ausführungsbeispiel

Ein Ausführungsbeispiel der Erfindung ist in der Zeichnung dargestellt und wird anhand der Figuren nachfolgend näher erläutert.

Im Einzelnen zeigen
- Fig. 1: einen schematischen Längsschnitt durch einen Mähdrescher,
- Fig. 2: eine Ausschnittvergrößerung mit Fördereinheit und teilweise dargestellter Abscheidevorrichtung,
- Fig. 3: einen ausschnittweise dargestellten Querschnitt durch eine Fördertrommel mit erfindungsgemäßem Abstreifelement,
- Fig. 4: eine perspektivische Darstellung eines Teils der Außenansicht einer Fördertrommel,
- Fig. 5: eine perspektivische Darstellung einer Schüttlerhorde zur Verwendung an einer Fördertrommel gemäß den Figuren 2 bis 4 und
- Fig. 6: eine perspektivische Darstellung einer zusätzlichen oben Fördereinrichtung zur Zuordnung an eine erfindungsgemäße Fördertrommel.

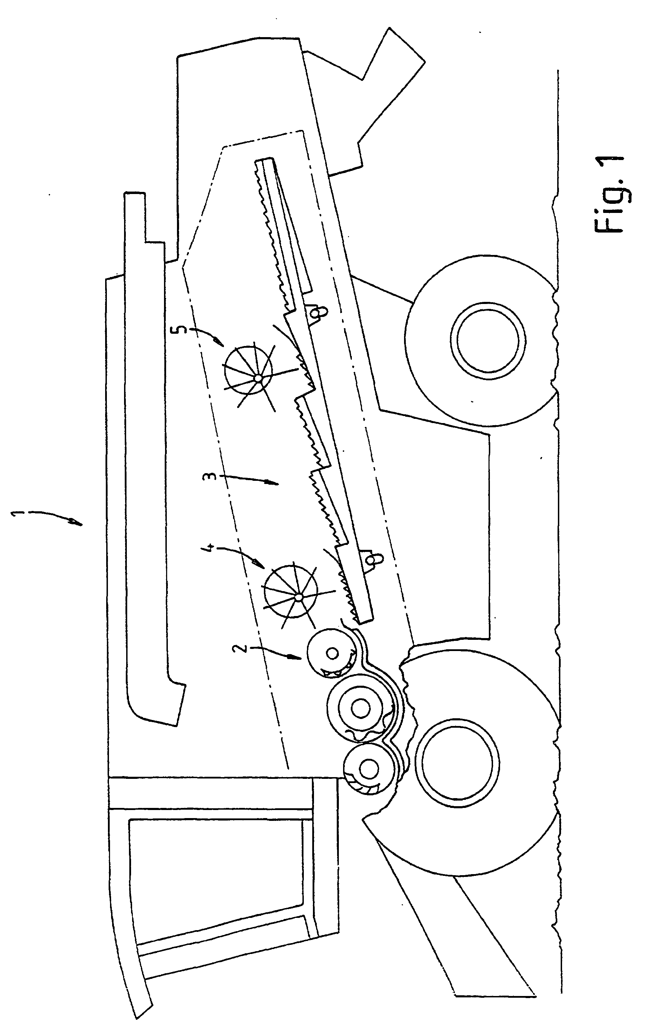

Der Mähdrescher 1 gemäß Fig. 1 umfaßt eine Dreschvorrichtung 2 zum Lösen von Getreidekörnern aus den Getreideähren sowie eine nachgeschaltete Abscheidevorrichtung 3 in Form eines Hordenschüttlers. Um das Gut zu dem Hordenschüttler hinzuführen bzw. auf dem Hordenschüttler 3 zu verteilen, sind zwei Fördereinheiten 4, 5, die unterschlächtig fördern, oberhalb des Hordenschüttlers 3 angebracht.

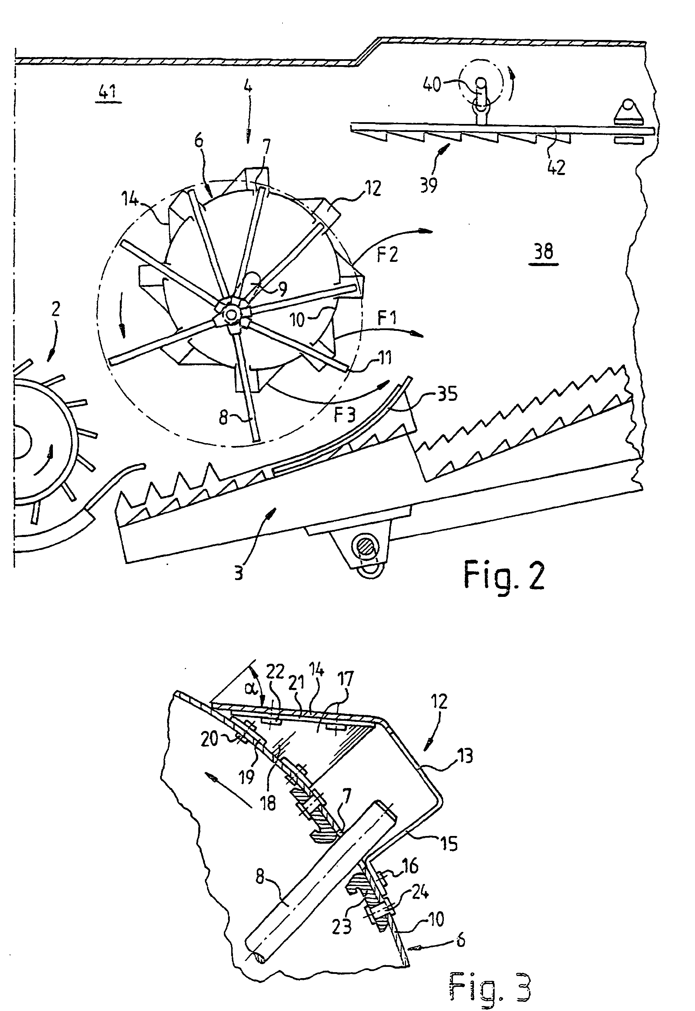

Der Aufbau der Fördereinheiten 4, 5 wird anhand von Fig. 2 deutlicher. In Fig. 2 ist die vordere Fördereinheit 4 in einem schematischen Querschnitt vergrößert dargestellt, wobei die hintere Fördereinheit 5 oder weitere nicht näher dargestellte Fördereinheiten gleich aufgebaut sein können.

Die Fördereinheit 4 umfaßt eine Fördertrommel 6 mit Durchlässen 7, in denen Förderzinken 8 beweglich gelagert sind. Die Förderzinken 8 sind innerhalb der Fördertrommel 6 auf einer Kurbelwelle 9 exzentrisch bezüglich der Drehachse der Fördertrommel 6 befestigt. Hierdurch ergibt sich beim Drehen der Fördertrommel und dabei stillstehender Kurbelwelle 9 eine Relativbewegung zwischen den Förderzinken 8 und dem Mantel 10 der Fördertrommel 6 bei der die Förderzinken 8 periodisch aus dem Mantel 10 hervortreten und anschließend wieder eintauchen. Entsprechend der Exzentrizität verändert sich die Winkelorientierung der Förderzinken 8 im Bezug zum Mantel 10 während dieser Bewegung in einem gewissen Ausmaß.

Um die Förderzinken 8 in ihrer Führung zu halten, ist es erforderlich, daß die Förderzinken 8 nicht vollständig ins Innere der Fördertrommel 6 eintauchen, sondern mit ihrem freien Ende 11 in dem Mantel 10 stets geführt bleiben.

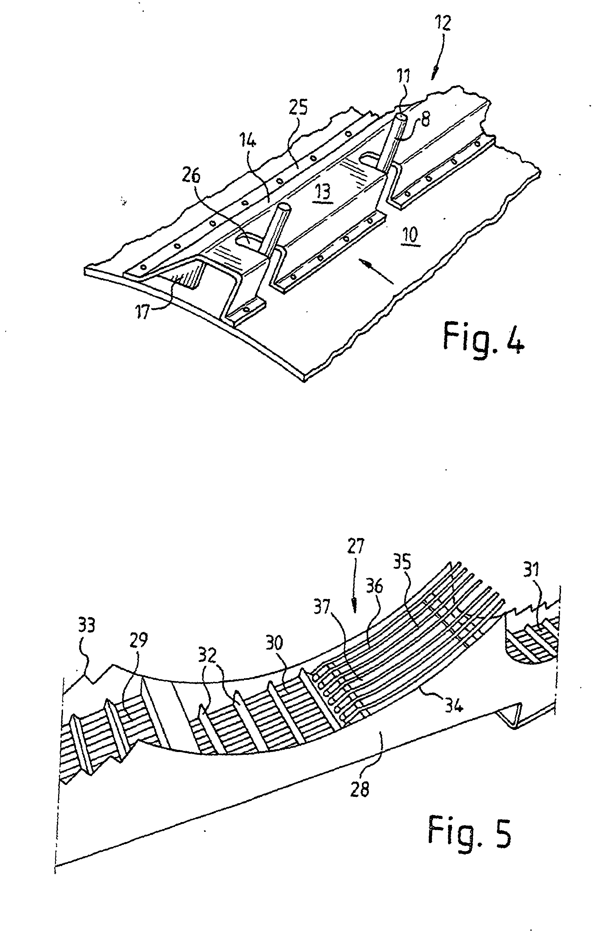

In Fig. 2 ist bereits andeutungsweise erkennbar, daß Abstreifelemente 12 im Bereich der Durchlässe 7 auf der Fördertrommel 6 angebracht sind. Diese Abstreifelemente 12 sind in der Ausschnittsvergrößerung gemäß Fig. 3 ausführlicher dargestellt.

Es ist erkennbar, daß das Abstreifelement 12 eine quer zu den Förderzinken 8 angeordnete Abstreifleiste 13 umfaßt, die auf der einen Seite mit einer schrägen, unter einem Winkel α gegenüber der radialen Ausrichtung geneigten Förderleiste 14 verbunden ist. Auf der der Förderleiste 14 gegenüberliegenden Seite ist die Abstreifleiste 13 über eine zweifache Abkantung 15 mit dem Mantel 10 der Fördertrommel 6 verbunden. Vorliegend ist die Befestigung über eine Vernietung 16 bewerkstelligt. Die Befestigung könnte jedoch auch durch Schweißen oder Verschrauben oder sonstige bekannte Befestigungsmaßnahmen bewerkstelligt werden.

Unterhalb der Förderleiste 14 ist ein dreieckiges Stützelement 17 angebracht, an dem eine Schmalseite 18 zur Anpassung an den Umfang des Mantels 10 gerundet ist. Das Stützelement 17 ist mit seitlichen Laschen 19 versehen, mittels denen es wiederum über eine Vernietung senkrecht von der Fördertrommel 6 abstehend an dem Mantel 10 befestigt ist. An Seitenstegen 21 ist die Förderleiste 14 ebenfalls über eine Vernietung 22 befestigt.

Darüberhinaus ist erkennbar, daß auf der Innenseite des Mantels 10 ein Führungselement 23 für den Förderzinken 8 mit Nieten 24 befestigt ist.

Aus der perspektivischen Darstellung gemäß Fig. 4, die im wesentlichen die gleiche Ausbildung des Abstreifelementes 12 zeigt, ist die Wirkung des Abstreifelementes 12 besser ersichtlich. Abweichend von dem vorgenannten Ausführungsbeispiel ist hier auch die Förderleiste 14 mit einer Abkantung 25 zur Befestigung auf dem Mantel 10 der Fördertrommel 6 versehen. Dementsprechend entfallen die Laschen 19 an dem Stützelement 17. In Fig. 4 ist insbesondere auch die Ausbildung der nach hinten bezüglich der Drehrichtung offenen Schlitze 26 zur Aufnahme der Förderzinken 8 erkennbar.

Während der Drehung der Fördertrommel bewegen sich die Zinken 8, wie oben angeführt, stets aus dem Mantel 10 hervor und ziehen sich wieder zurück. Hierbei durchsetzen sie die Schlitze 26 der Abstreifelemente 12 in der ausgefahrenen Stellung und ziehen sich in der zurückgezogenen Stellung vollständig in den Raum unterhalb der Abstreifleiste 13 zurück. Dabei wird nahezu alles Fördergut, das sich an den Zinken 8 befindet über die freien Enden 11 der Förderzinken 8 hinaus abgestreift. In Fig. 3 sowie in Fig. 2 ist dieser Vorgang erkennbar. Insbesondere sind dort die eingefahrenen Stellungen, bei denen sich die Förderzinken 8 vollständig unterhalb der Abstreifleiste 13 befinden, dargestellt.

Die schrägen Förderleisten 14 fördern dabei zugleich das halm- oder stengelartige Gut, beispielsweise Stroh, in Förderrichtung nach hinten. Die Wirkung der Förderleisten 14 ist durch die Pfeile F₁, F₂ und F₃ in Fig. 2 angedeutet. Die Pfeile F₁ und F₂ sind senkrecht von der Förderleiste 13 abgehend nach unten gebogen dargestellt, um den Einfluß der Schwerkraft auf das abgegebene Fördergut anzudeuten. Der untere Pfeil F₃ ist nach oben gebogen, da unterhalb der Fördertrommel 6 der Hordenschüttler 3 eine nach oben gebogene Form aufweist, wodurch sich eine entsprechende Führung des Gutstroms ergibt. Diese je nach Winkelstellung der Fördertrommel unterschiedlichen Förderrichtungen unterstützen das Auflockern des Ernteguts.

Jede Schüttlerhorde 27 ist, wie aus Fig. 5 ersichtlich, mit seitlichen Gehäusewänden 28 und abgestuften Böden 29, 30, 31 versehen. Die Böden 29, 30, 31 sind sieb- oder rechenartig aufgebaut, so daß halm- oder stengelartiges Gut auf ihnen weitertransportiert wird, während körniges Gut hindurchfallen kann. Querstege 32 unterstützen die Bewegungsrichtung des Förderguts in Förderrichtung während der Schüttelbewegungen ebenso wie die Verzahnung 33 der Gehäusewände 28.

Die Schüttlerhorde 27, die unterhalb der Fördereinheit 6 angeordnet ist, ist an die Trommelform angepaßt. Hierzu ist zum einen die Verzahnung 33 an jeder Gehäusewand 28 unterbrochen und statt dessen eine Rundung 34 eingearbeitet. Weiterhin ist in dem der Fördertrommel am nächsten anzunähernden Bereich 35 der Boden der Schüttlerhorde modifiziert. Hier befinden sich der Rundung 34 angepaßte, das heißt entsprechend gebogene rechenartig nebeneinander angeordnete Stäbe 36, so daß sich Längsspalte 37 ergeben.

Diese Ausbildung der Schüttlerhorde 27 ermöglicht zum einen das dichte Heranbringen der Schüttlerhorde während der Schüttelbewegung an die Fördertrommel 6. Durch die rechenartige Anordnung der Stäbe 36 ist es möglich, daß die Zinken 8 ein stückweit in die Längsschlitze 37 eintauchen können, so daß eine vollständige Mitnahme des darauf gelagerten halmförmigen Gutes gewährleistet ist. Zugleich ergibt sich eine Führung des Förderguts nach oben. Die derart ausgestaltete Schüttlerhorde wirkt gewissermaßen als Abwurframpe für das Fördergut. Dies verbessert die gleichmäßige aufgelockerte Gutverteilung auf dem nachfolgenden Teil des Horderschüttlers 2, insbesondere im Zusammenwirken mit den Förderleisten 14.

Die vorteilhaften Wirkungen der Förderleisten 14 bzw. der speziellen, der Fördertrommel 6 angepaßten Schüttlerhorden sind jedoch auch unabhängig voneinander zu erzielen. Die verbesserte Schüttlerhorde 27 ist daher nicht nur in Kombination mit Abstreif- und Förderelementen 12, 13, 14 und insbesondere auch nicht nur in Verbindung mit kurbelgesteuerten Förderzinken 8 verwendbar, sondern kann auch bei anderen Fördereinheiten, beispielsweise auch bei Fördertrommeln mit feststehenden Zinken eingesetzt werden.

Des Weiteren hat sich als besonders vorteilhaft erwisen, den Förderraum (38) für das Gutgemisch unmittelbar hinter der oder den Fördereinheit(en) 4, 5 nach oben hin durch eine Fördereinrichtung 39 zu begrenzen, so daß der Gutfluß zusätzlich von oben her positiv beeinflußt wird.

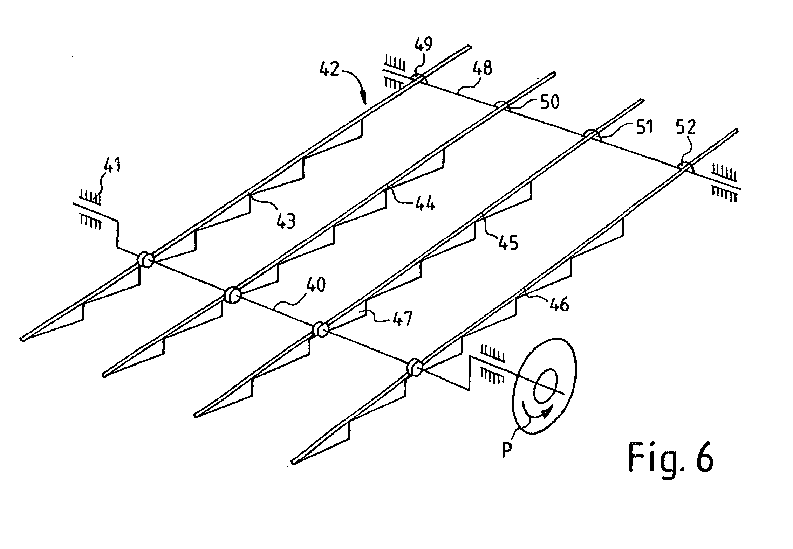

Eine derartige zusätzliche obere Fördereinrichtung 39 ist in den Figuren 2 und 6 dargestellt. Sie umfaßt eine Kurbelwelle 40, die an dem Maschinengehäuse 41 drehbar gelagert ist. Die Kurbelwelle 40 dient als Antrieb für einen Schubstangenförderer 42 mit mehreren nebeneinander angeordneten Schubstangen 34, 44, 45, 46. Die Schubstangen 43 bis 46 sind jeweils mit treppenförmigen Mitnahmeelementen 47 versehen. Die Schubstangen 43 bis 46 sind in einer ebenfalls am Gehäuse 43 befestigten Führungsstange 48 mit Führungsösen 49, 50, 51, 52 verschiebbar und schwenkbar gelagert.

Die Kurbelwelle 40 wird über einen nicht näher dargestellten Antrieb in eine Drehung versetzt, wie durch den Pfeil P dargestellt. Hierdurch werden die Schubstangen 43 bis 46 in eine periodische Bewegung versetzt, bei der sich eine Aufund Abwärtsbewegung mit einer Hin- und Herbewegung in Längsrichtung überlagert. In dieser Bewegung wird durch die Schubstangen 43 bis 46, insbesondere in Verbindung mit den Förderelementen 47 das im Bereich des Schubstangenförderers 42 auftreffende Material in seiner Aufwärtsbewegung nach hinten hin umgelenkt und weitergeleitet. Durch eine zusätzliche obere Fördereinrichtung 39 im Förderraum 38 kann eine nochmalige Verbesserung der Gutverteilung auf dem Hordenschüttler 3 erzielt werden. Jeder Fördereinheit 4, 5 kann eine solche Fördereinrichtung 39 bei Bedarf zugeordnet werden.

### Bezugszeichenliste :

- 1: Mähdrescher
- 2: Dreschvorrichtung
- 3: Hordenschüttler
- 4: Fördereinheit
- 5: Fördereinheit
- 6: Fördertrommel
- 7: Durchlaß
- 8: Förderzinken
- 9: Kurbelwelle
- 10: Mantel
- 11: freies Ende
- 12: Abstreifelement
- 13: Abstreifleiste
- 14: Förderleiste
- 16: Vernietung
- 17: Stützelement
- 18: Schmalseite
- 19: Lasche
- 20: Vernietung
- 21: Seitensteg
- 22: Vernietung
- 23: Führungselement
- 24: Niet
- 25: Abkantung
- 26: Schlitz
- 27: Schüttlerhorde
- 28: Gehäusewand
- 29: Boden
- 30: Boden
- 31: Boden
- 32: Quersteg
- 33: Verzahnung
- 34: Rundung
- 35: Bereich
- 36: Stab
- 37: Längsspalt
- 38: Förderraum
- 39: Fördereinrichtung
- 40: Kurbelwelle
- 41: Gehäuse
- 42: Schubstangenförderer
- 43: Schubstange
- 44: Schubstange
- 45: Schubstange
- 46: Schubstange
- 47: Mitnahmeelement
- 48: Führungsstange
- 49: Führungsöse
- 50: Führungsöse
- 51: Führungsöse
- 52: Führungsöse

## Patentansprüche

1. Erntemaschine, insbesondere Mähdrescher mit einer Trennvorrichtung zum Trennen eines kornförmigen Gutstroms von dem Gutstrom pflanzlicher Restbestandteile mit einer der Trennvorrichtung nachgeschalteten Abscheidevorrichtung, wobei eine umlaufende Fördereinheit für die Gutstromförderung von der Trennvorrichtung zur Abscheidevorrichtung vorgesehen ist, die eine rotierende Fördertrommel (6) umfaßt, an der Förderzinken (8) beweglich gegenüber der Fördertrommel angebracht sind, **dadurch gekennzeichnet, daß** wenigstens ein Abstreifelement (12) zum Abstreifen des Gutes von dem freien Ende (11) der Förderzinken (8) an der Fördertrommel (6) angebracht ist, das eine sich über die Länge der Fördertrommel (6) erstreckende Abstreifleiste (13) mit Ausnehmungen (26) zur Aufnahme der Förderzinken (8) umfaßt.

2. Erntemaschine nach Anspruch 1, **dadurch gekennzeichnet, daß** neben den Förderzinken (8) wenigstens ein zusätzliches Förderelement (14) vorgesehen ist.

3. Erntemaschine nach Anspruch 2, **dadurch gekennzeichnet, daß** das Abstreifelement (12) das zusätzliche Förderelement (14) umfaßt.

4. Erntemaschine nach einem der Ansprüche 2 oder 3, **dadurch gekennzeichnet, daß** das zusätzliche Förderelement eine schräg von der Mantelfläche (10) der Fördertrommel (6) abstehende Förderleiste (14) umfaßt.

5. Erntemaschine nach Anspruch 4, **dadurch gekennzeichnet, daß** die Förderleiste (14) mit der Abstreifleiste (13) verbunden ist.

6. Erntemaschine nach Anspruch 5, **dadurch gekennzeichnet, daß** die Förderleiste (14) durchgehend mit der Abstreifleiste (13) verbunden ist.

7. Erntemaschine nach einem der vorgenannten Ansprüche, **dadurch gekennzeichnet, daß** die Ausnehmungen in dem Abstreifelement (12) als einseitig offene Schlitze (26) ausgebildet sind.

8. Erntemaschine nach einem der Ansprüche 5 bis 7, **dadurch gekennzeichnet, daß** die Förderleiste (14) und die Abstreifleiste (13) aus einem Blech haubenförmig gebogen sind.

9. Erntemaschine nach einem der vorgenannten Ansprüche, **dadurch gekennzeichnet, daß** Stützelemente (17) unter dem Abstreifelement (12) vorgesehen sind.

10. Erntemaschine nach einem der vorgenannten Ansprüche, **dadurch gekennzeichnet, daß** wenigstens zwei Fördereinheiten (6) über die Länge der Abscheidevorrichtung (3) verteilt sind.

11. Erntemaschine nach einem der vorgenannten Ansprüche, **dadurch gekennzeichnet, daß** die Abscheidevorrichtung (3) ein Hordenschüttler ist, wobei die Schüttlerhorden (27) im Bereich der Fördertrommel (6) an die Trommelform angepaßt sind.

12. Erntemaschine nach Anspruch 11, **dadurch gekennzeichnet, daß** die Gehäusewandungen (28) der Schüttlerhorden (27) an die Trommelform der Fördertrommel (6) angepaßte gerundete Ausschnitte (34) aufweisen.

13. Erntemaschine nach einem der Ansprüche 11 oder 12, **dadurch gekennzeichnet, daß** die Gehäusewandungen (28) jeder Schüttlerhorde (27) eine im Bereich der Ausschnitte (34) unterbrochene sägezahnförmige Ausbildung (33) aufweisen.

14. Erntemaschine nach einem der Ansprüche 11 bis 13, **dadurch gekennzeichnet, daß** in dem der Fördertrommel (6) am nächsten kommenden Bereich jeder Schüttlerhorde (27) eine rechenförmige Anordnung gebogener Stäbe (36) vorgesehen ist.

15. Erntemaschine nach einem oder mehreren der vorgenannten Ansprüche, **dadurch gekennzeichnet, daß** der beziehungsweise den Fördereinheit(en) 4 und/oder 5 zusätzliche obere Fördereinrichtungen (39) zugeordnet sind.

16. Fördertrommel für eine Erntemaschine nach einem der vorgenannten Ansprüche, insbesondere für einen Mähdrescher zur Förderung von Erntegut, an der Förderzinken (8) beweglich gegenüber der Fördertrommel angebracht sind, **dadurch gekennzeichnet, daß** wenigstens ein Abstreifelement (12) zum Abstreifen des Erntegutes von dem freien Ende (11) der Förderzinken (8) an der Fördertrommel angebracht ist, das eine sich über die Länge der Fördertrommel (6) erstreckende Abstreifleiste (13) mit Ausnehmungen (26) zur Aufnahme der Förderzinken (8) umfaßt.

## Claims

1. Harvesting machine, in particular combine harvester, comprising a dividing device for dividing a granular stream of material from the stream of material of remaining plant parts, comprising a separating device connected downstream of the dividing device, a revolving conveying unit for conveying the stream of material from the dividing device to the separating device being provided which comprises a rotating conveying drum (6) on which conveying tines (8) movable with respect to the conveying drum are provided, **characterised in that** at least one stripping element (12) for stripping the material from the free end (11) of the conveying tines (8) is provided on the conveying drum (6), the stripping element including a stripping rail (13) extending over the length of the conveying drum (6) and having recesses (26) for receiving the conveying tines (8).

2. Harvesting machine according to claim 1, **characterised in that** apart from the conveying tines (8), at least one additional conveying element (14) is provided.

3. Harvesting machine according to claim 2, **characterised in that** the stripping element (12) includes the additional conveying element (14).

4. Harvesting machine according to either of claims 2 or 3, **characterised in that** the additional conveying element includes a conveying strip (14) protruding obliquely from the circumferential surface area (10) of the conveying drum (6).

5. Harvesting machine according to claim 4, **characterised in that** the conveying strip (14) is connected to the stripping rail (13).

6. Harvesting machine according to claim 5, **characterised in that** the conveying strip 14) is connected continuously to the stripping element (13).

7. Harvesting machine according to any of the preceding claims, **characterised in that** the recesses in the stripping element (12) are designed as slots (26) which are open on one side.

8. Harvesting machine according to any of claims 5 to 7, **characterised in that** the conveying strip (14) and the stripping rail (13) are bent in the shape of a hood from sheet metal.

9. Harvesting machine according to any of the preceding claims, **characterised in that** supporting elements (17) are provided under the stripping element (12).

10. Harvesting machine according to any of the preceding claims, **characterised in that** at least two conveying units (6) are distributed over the length of the separating device (3).

11. Harvesting machine according to any of the preceding claims, **characterised in that** the separating device (3) is a tray-type shaker, the shaker trays (27) being adapted to the shape of the drum in the region of the conveying drum (6).

12. Harvesting machine according to claim 11, **characterised in that** the housing walls (28) of the shaker trays (27) have rounded cutouts (34) adapted to the shape of the conveying drum (6).

13. Harvesting machine according to either of claims 11 or 12, **characterised in that** the housing walls (28) of each shaker tray (27) have a sawtooth-shaped design (33) except in the region of the cutouts (34).

14. Harvesting machine according to any of claims 11 to 13, **characterised in that** a rake-shaped arrangement of bent bars (36) is provided in a region of each shaker tray (27) which comes nearest to the conveying drum (6).

15. Harvesting machine according to any one or more of the preceding claims, **characterised in that** additional, upper conveying means (39) are associated with the conveying unit (s) 4 and/or 5.

16. Conveying drum for a harvesting machine according to any of the preceding claims, in particular for a combine harvester for conveying harvested material, on which conveying tines (8) moveable with respect to the conveying drum (6) are provided, **characterised in that** at least one stripping element (12) for stripping the material from the free end (11) of the conveying tines (8) is provided on the conveying drum, the stripping element comprising a stripping rail (13) extending over the length of the conveying drum (6) and having recesses (26) for receiving the conveying tines (8).

## Revendications

1. Moissonneuse notamment moissonneuse-batteuse comprenant :
un dispositif séparateur pour séparer le flux des grains du flux des otons,
un dispositif d'évacuation en aval du dispositif séparateur, une unité de dégagement en circulation transférant le flux de produits entre le dispositif séparateur et le dispositif d'évacuation, cette unité comprenant un tambour de dégagement (6) rotatif portant des dents de transfert (8), mobiles par rapport au tambour,
**caractérisée en ce que**
le tambour de dégagement (6) comporte au moins un élément racleur (12) pour racler le produit de l'extrémité libre (11) des dents de transfert (8), cet élément comprenant un longeron de raclage (13) s'étendant sur la longueur du tambour de dégagement (6) et comportant des découpes (26) pour recevoir les dents de dégagement (8).

2. Moissonneuse selon la revendication 1,
**caractérisée par**
au moins un élément de transfert (14) supplémentaire en plus des dents de transfert (8).

3. Moissonneuse selon la revendication 2,
**caractérisée en ce que**
l'élément racleur (12) comprend l'élément de transfert (14) supplémentaire.

4. Moissonneuse selon l'une quelconque des revendications 2 ou 3,
**caractérisée en ce que**
l'élément de transfert supplémentaire comprend une barrette de transfert (14) inclinée en saillie de la surface enveloppe (10) du tambour de transfert (6).

5. Moissonneuse selon la revendication 4,
**caractérisée en ce que**
la barrette de transfert (14) est reliée au longeron de raclage (13),

6. Moissonneuse selon la revendication 5,
**caractérisée en ce que**
la barrette de transfert (14) est reliée en continu au longeron de raclage (13).

7. Moissonneuse selon l'une quelconque des revendications précédentes,
**caractérisée en ce que**
les découpes de l'élément racleur (12) sont constituées par des fentes (26) ouvertes d'un côté.

8. Moissonneuse selon l'une quelconque des revendications 5 à 7,
**caractérisée en ce que**
la barrette de transfert (14) et le longeron de raclage (13) sont réalisés dans une même tôle pliée en forme de capot.

9. Moissonneuse selon l'une quelconque des revendications précédentes,
**caractérisée par**
des éléments d'appui (17) prévus sous l'élément racleur (12).

10. Moissonneuse selon l'une quelconque des revendications précédentes,
**caractérisée en ce qu'**
au moins deux unités de dégagement (6) sont réparties sur la longueur du dispositif d'évacuation (3).

11. Moissonneuse selon l'une quelconque des revendications précédentes.
**caractérisée en ce que**
le dispositif d'évacuation (3) est un secoueur à claies, dont les claies (27) sont adaptées à la forme du tambour dans la zone du tambour de dégagement (6).

12. Moissonneuse selon la revendication 11,
**caractérisée en ce que**
les parois de boîtier (28) des claies du secoueur (27) ont des découpes (34), arrondies, adaptées à la forme du tambour de dégagement (6).

13. Moissonneuse selon l'une quelconque des revendications 11 ou 12,
**caractérisée en ce que**
les parois de boîtier (28) de chaque claie de secoueur (27) ont une forme de dents (33) interrompues au niveau des découpes (34).

14. Moissonneuse selon l'une quelconque des revendications 11 à 13,
**caractérisée par**
une disposition de tiges (36) cintrées en forme de râteaux dans la zone la plus proche du tambour de dégagement (6).

15. Moissonneuse selon l'une quelconque des revendications précédentes,
**caractérisée par**
des installations de transfert (39) supérieures, supplémentaires associées à la ou aux unités de dégagement (4) et/ou (5).

16. Tambour de transfert de moissonneuse selon l'une quelconque des revendications précédentes, notamment pour une moissonneuse-batteuse, pour transférer le produit de récolte, ce tambour comportant des dents de dégagement (8) mobiles par rapport au tambour,
**caractérisé par**
au moins un élément racleur (12) pour racler le produit de récolte d'une extrémité libre (11) des dents de dégagement (8), cet élément étant prévu sur le tambour de transfert et il comprend un longeron de raclage (13) qui s'étend sur la longueur du tambour de transfert (6) et comporte des découpes (26) pour recevoir les dents de dégagement (8).
